# EUROPEAN PATENT SPECIFICATION

(11) **EP 4 305 218 B1**
(45) Date of publication and mention of the grant of the patent: **30.07.2025**
(21) Application number: 22715403.6
(22) Date of filing: 10.03.2022
(51) Int. Cl.: C22B 1/02, C22B 7/00, C22B 11/00, C22B 3/00, C22B 19/30

(54) **METHOD FOR THE TREATMENT OF RESIDUES FROM THE ZINC AND LEAD PRODUCTION INDUSTRY, WITH OBTAINMENT OF EXPLOITABLE PRODUCTS AND SECONDARY RAW MATERIALS, ACCORDING TO THE STRATEGIES OF THE CIRCULAR ECONOMY**
VERFAHREN ZUR BEHANDLUNG VON RÜCKSTÄNDEN AUS DER ZINK- UND BLEIPRODUKTIONSINDUSTRIE MIT GEWINNUNG VERWERTBARER PRODUKTE UND SEKUNDÄRROHSTOFFE NACH DEN STRATEGIEN DER KREISLAUFWIRTSCHAFT
PROCÉDÉ DE TRAITEMENT DE RÉSIDUS DE L'INDUSTRIE DE PRODUCTION DE ZINC ET DE PLOMB, AVEC OBTENTION DE PRODUITS VALORISABLES ET DE MATIÈRES PREMIÈRES SECONDAIRES, SELON LES STRATÉGIES DE L'ÉCONOMIE CIRCULAIRE

(30) Priority: 10.03.2021 IT 202100005630
(43) Date of publication of application: 17.01.2024
(73) Proprietor: Ecotec Gestione Impianti S.r.l., 96100 Siracusa (IT)
(72) Inventor: IMERITO, Aldo, 96100 Siracusa (IT); PISU, Massimo, 96100 Siracusa (IT); RAGONA, Mario, 96100 Siracusa (IT); AZARA, Pierandrea, 96100 Siracusa (IT); MALAFRONTE, Francesca, 96100 Siracusa (IT); CASULA, Arianna, 96100 Siracusa (IT); MAMELI, Anna, 96100 Siracusa (IT)
(74) Representative: Santi, Filippo
(86) International application number: PCT/IT2022/050049
(87) International publication number: WO 2022/190153

(56) References cited:
- EP-A1- 3 587 599
- ES-A1- 2 137 871
- US-A- 3 676 107
- US-A- 4 355 005
- GÜLER E. ET AL: "Hydrometallurgical Evaluation of Zinc Plant Residue", ASIAN JOURNAL OF CHEMISTRY, vol. 23, no. 7, 4 March 2011 (2011-03-04), pages 2879 - 2888, XP055865544

## Description

The present invention refers to the technical field of the treatment of solid residues generated by the zinc and lead production industry, with the aim of obtaining, from these rejects, exploitable products and secondary raw materials and drastically reducing or eliminating the need to dispose of these residues in landfill, according to the strategies of the circular economy.

In particular, the object of the present invention is a treatment of a residue generated by the zinc and lead production industry, known as jarosite or slurries of jarosite (hereinafter always referred to as jarosite), by means of a combination of thermal and hydrometallurgical processes. The overall result of the treatment is the obtainment of exploitable compounds, to be reintroduced into the productive cycle or on the respective reference markets.

The current management of residues generated by the zinc and lead production industries presents critical issues in environmental, economic, and social terms. These residues still contain, to a greater or lesser extent, potentially exploitable elements. However, these are in a complex chemical form and not suitable for their extraction with commonly used industrial processes. For this reason, according to the dictates of the linear economy, now no longer sustainable, these rejects are managed as waste and are disposed of (after appropriate pre-treatment) in an authorized landfill.

In particular, jarosite contains high added value chemical species such as zinc, silver, copper, indium, lead, iron and other metals, also including rare metals and rare earths, whose potential commercial value corresponds, for each production site, to dozens of millions of euros.

More specifically, if we consider that the production of such rejects, for a single medium-sized production site, can even reach several hundreds of thousands of tons per year, it is evident the substantial consumption of landfill volumes and the economic loss due to the failure to exploit potentially exploitable compounds.

This conduct, therefore, involves the loss of exploitable materials and the non-rational use of the available landfill volumes, which are now increasingly scarce and difficult to renew. In this context, without a change of conduct, industries may no longer have available ways of waste disposal, with the resulting need to close and lose thousands of direct and indirect jobs.

For these reasons, over the years, the awareness of the need for a transition from the linear economy to the circular economy has also come to the zinc and lead production field, and, in recent times, the studies on new processes to reduce the amount of waste produced at the origin have been intensified; where this is not possible, the studies aim to identify techniques and treatments capable of minimizing the rejects to be sent for disposal, recovering and reintroducing into the productive cycles the greatest possible amount of exploitable components.

In the zinc and lead production field, the literature of this field and the proposed processes are based on methods that use hydrometallurgical type treatments, pyrometallurgical type treatments or combinations of both techniques. Many of these methods, each with its own peculiarities, have as their aim the recovery and the resulting valorization of species to choose from zinc, lead, copper, indium, germanium and silver, if any. Many of these methods employ thermal treatments at very high temperatures, up to 1500°C, followed by hydrometallurgical treatments. Although these methods are effective, they have a non-negligible consumption of heat and electricity and require rather sophisticated and expensive systems and equipment. These critical factors make these processes unattractive for industries, where it is not possible to access to electricity and heat at discounted or low-cost rates through synergies linked to individual local realities. Due to these peculiarities, even technically valid methods have a little widespread application and residues such as jarosite continue to be sent for disposal in landfills, with the negative effects previously described.

Among the methods of the prior art, by way of example, it is possible to mention those described in US4355005A, ES2137871A1, US3676107A, EP3587599A1, as well as the article by Güler E. et al. "Hydrometallurgical Evaluation of Zinc Plant Residue", ASIAN JOURNAL OF CHEMISTRY, vol. 23, n. 7, 4 March 2011 (2011-03-04), pages 2879-2888, XP055865544.

The solution according to the present invention fits into this context, aiming to provide a structured method, based on a combination of thermal and hydrometallurgical processes with lower energy impact compared to the processes already known, for the treatment of jarosite generated in the zinc production industry, with the aim of obtaining the greatest possible amount of exploitable components and secondary raw materials and eliminating or in any case drastically reducing the need for landfill disposal.

These and other results are obtained according to the present invention by proposing a method for the treatment of residues of the zinc and lead production industry, with obtainment of exploitable products and secondary raw materials, according to the strategies of the circular economy, through thermal and hydrometallurgical treatments comprising:
- thermal pre-treatment of residues from the zinc and lead production industry, in particular jarosite, to obtain a solid fraction containing sulphates of different elements and iron(III) oxide;
- acid leaching of the solid fraction obtained from the thermal pre-treatment, to obtain an acid flow containing a solution of zinc, copper and silver sulphates, and a solid fraction enriched in iron oxides, lead sulphate and silver sulphate;
- saline leaching of the solid fraction obtained from the acid leaching step, to obtain a saline solution containing lead and silver and a solid fraction enriched in iron(III) oxide and containing silica;
- post-treatments of refining of the saline solution and of the solid fraction obtained from the saline leaching step.

The aim of the present invention is therefore to provide a method for the treatment of residues of the zinc and lead production industry that allows to overcome the limits of the treatment methods according to the prior art and to obtain the technical results previously described.

A further aim of the invention is that said method can be implemented with substantially contained costs, both in terms of start-up costs and management costs.

Last but not the least, a further aim of the invention is to propose a method for the treatment of residues from the zinc and lead production industry that is safe and reliable.

Therefore, a specific object of the present invention is a method for the treatment of jarosite and other residues of the zinc and lead production industry, as defined in the attached claim 1, or comprising the following steps:
- thermal treatment of residues, at a temperature between 500°C and 700°C, to obtain the evaporation of the imbibition water and the demolition of the jarosite molecule, resulting in the development of SO₃ and in the removal of OH⁻ groups to give additional water in the gaseous phase, and resulting in the obtainment, from the recondensation of these components, of an aqueous solution of diluted sulfuric acid, and with the simultaneous formation of a solid fraction composed of iron(III) oxide, zinc, lead, silver, copper sulphates and other minor elements;
- acid leaching of said solid fraction obtained from said thermal treatment step, by adding an acid leaching solution, to obtain an acid flow containing a solution of zinc, copper and silver sulphates, and a solid fraction enriched in iron oxides, lead sulphate and silver sulphate;
- saline leaching of said solid fraction obtained from said acid leaching step, to obtain a saline solution containing lead and silver and a solid fraction enriched in iron(III) oxide and containing silica;
- refining treatment of the saline solution containing lead and silver obtained from said saline leaching step; and
- purification of the silica of the solid fraction enriched in iron(III) oxide and containing silica obtained from said saline leaching step, by using an acid solution, to obtain
- solubilization of iron(III);
- separation of the solubilized iron(III) from the silica, which remains insolubilized;
- precipitation of iron(III) to obtain iron oxide pigment.

Further characteristics of the method according to the present invention are specified in the subsequent dependent claims.

The invention will be described below for illustrative but not limitative purposes, with particular reference to some illustrative examples and the attached figure, which schematically shows a block diagram of the method according to an embodiment of the present invention.

In overall terms, the method for treating residues from the zinc and lead production industry according to the present invention employs thermal and hydrometallurgical treatments and is conceptually divided into four steps:
- thermal pre-treatment of residues from the zinc and lead production industry, in particular jarosite, to obtain a solid fraction containing sulphates of different elements and iron(III) oxide;
- acid leaching of the solid fraction obtained from thermal pre-treatment, to obtain an acid flow containing a solution of zinc, copper and silver sulphates, and a solid fraction enriched in iron oxides, lead sulphate and silver sulphate;
- saline leaching of the solid fraction obtained from the acid leaching step, to obtain a saline solution containing lead and silver and a solid fraction enriched in iron(III) oxide and containing silica;
- post-treatments of refining of the saline solution and of the solid fraction obtained from the saline leaching step, wherein the solid fraction is treated with an acid solution to precipitate the iron(III) oxide in the form of iron oxide pigment.

Again in overall terms, the method for the treatment of residues from the zinc and lead production industry according to the present invention is able to
- extract, separately, a solution containing zinc and silver, to be returned to the production process of metallic zinc in the plant;
- produce a compound enriched in lead and silver, which, given the opportunity, can be purified in a specific step of the method according to the invention, or it can be returned to the lead and silver production processes in the plant;
- produce an iron(III) oxide in the form of hematite (Fe₂O₃), with a degree of purity >95%, which can be exploited as it is on the reference market, and which, at least in part, in the method according to the invention, is further processed in a dedicated step of the procedure, to produce iron oxide pigment (IOP), with a minimum degree of purity of 96%, in accordance with the minimum quality required by the ASTM D1208 standard method for pigments intended for "Painting and Related Coatings".

Furthermore, the method for the treatment of residues of the zinc and lead production industry according to the present invention produces, with respect to the jarosite treated as it is, a final residue between 4.5% and 9.0% by weight, consisting mainly of crude sodium silicate. If the market is able to absorb it, the crude sodium silicate can be employed as a secondary raw material, for example as an additive for cement and ceramic mixtures. In any case, even in the event of having to manage the crude sodium silicate as a waste, the method according to the invention is able to reduce the disposable waste by over 90%, compared to the amount of jarosite currently sent for disposal.

The method for the treatment of residues of the zinc and lead production industry according to the present invention, in addition to operate at maximum temperatures considerably lower than similar methods, has among its peculiarities the ability to regenerate the main reagents used, so that only physiological replenishments are required. These characteristics of the method according to the invention have a positive effect on the environmental and economic balances of the entire method.

The method for the treatment of residues of the zinc and lead production industry according to the present invention, as a whole, is therefore able to produce, from a reject originally intended for the landfill, compounds or enriched compounds that can be intended partly for the reprocessing in the plant (actually increasing the overall yield of extraction from the original raw material), partly for the reference markets (precious metals, rare metals, steel production, iron oxide pigment - IOP), overall drastically reducing the amount of reject, compared to what is disposed of in the form of jarosite according to the prior art.

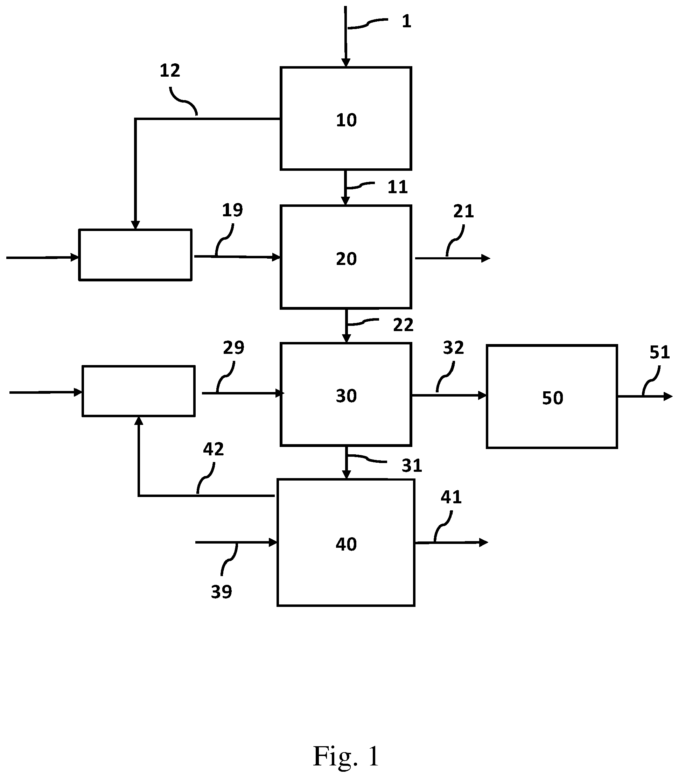

Referring now to the attached figure 1, a more detailed description of the method for the treatment of residues of the zinc and lead production industry according to an exemplary but not limiting embodiment of the present invention will be provided, so as to show its characteristics and peculiarities. The method employs a combination of thermal and hydrometallurgical treatments and is conceptually divided into four steps:
- thermal pre-treatment 10 of residues 1 from the zinc and lead production industry, in particular jarosite, to obtain a solid fraction 11 containing sulphates of different elements and iron(III) oxide and an aqueous solution 12 of diluted sulfuric acid;
- acid leaching 20 of the solid fraction 11 obtained from thermal pre-treatment 10, to obtain an acid flow 21 containing a solution of zinc, copper and silver sulphates, and a solid fraction 22 enriched in iron oxides, lead sulphate and silver sulphate;
- saline leaching 30 of the solid fraction 22 obtained from the acid leaching step 20, to obtain a saline solution 31 containing lead and silver and a solid fraction 32 enriched in iron(III) oxide and containing silica;
- post treatments 40, 50 of refining of the saline solution 31 and of the solid fraction 32 obtained from the saline leaching step 30.

The residue 1 called jarosite has a complex molecule having a variable composition, which can be, for example, represented by a formula of the type (Me)Fe₆(SO₄)₄(OH)₁₂, where Me is a metal: mainly iron, zinc, lead and, typically, sodium or potassium. There are also, to a lesser extent, mixed sulphides of these same metals.

During the thermal pre-treatment 10 according to the invention, the jarosite is fed to a thermal pre-treatment oven, without any addition of reactants or additives. During this step of the process, in a single stage conducted starting from 250°C up to a temperature above 500°C, with a maximum temperature of 700°C, the evaporation of the imbibition water, and the demolition of the jarosite molecule with removal of OH⁻ groups are obtained at the same time by producing additional water; finally, at the indicated temperature, the targeted breakdown of the iron sulphate molecule is obtained, with its transformation into iron(III) oxide and the production of SO₃. The maximum temperature of the process, that is 700°C, is crucial to ensure the specific formation of iron(III) oxide and zinc, lead, silver, copper sulphates and other minor exploitable elements. The different chemical composition of these compounds with respect to the iron oxides is especially produced by the method according to the invention, as it promotes different solubilities in specific leaching conditions, which are favourably exploited in the subsequent steps.

The reactions involved in the thermal pre-treatment method 10, with the exception of the evaporation phase of the imbibition water, are described by the following equations:

(Me)Fe₆(SO₄)₄(OH)₁₂ → (Me)Fe₆(SO₄)₄O₆ + 6H₂O (a)

(Me)Fe₆(SO₄)₄O₆ → MeSO₄ + 3SO₃ + 3Fe₂O₃ (b)

Unlike other similar methods according to the prior art for the treatment of these residues, which provide that reaction (a) and reaction (b) take place in clearly distinct steps, so as not to create sulfuric acid vapours due to the simultaneous presence of water and SOs, the method for the treatment of residues of the zinc and lead production industry according to the present invention specifically generates these two compounds in the same step; in this way a recondensation of diluted sulfuric acid is directly generated in an aqueous solution 12 which will be used in the subsequent acid leaching step 20. To carry out this part of the method, the specific sections of the plant will be made of materials with suitable resistance to acid sulfuric gases.

The solid fraction 11 produced by the thermal pre-treatment 10, containing sulphates of different elements and iron(III) oxide, is subjected to a leaching step in an acid environment 20. In a preferred embodiment of the method according to the invention, the acid used is sulfuric acid in an aqueous acid leaching solution 19 with a concentration between 0.005 mol/L and 0.1 mol/L. In a preferred embodiment of the method according to the invention, the concentration of the sulfuric acid solution 19 is 0.01 mol/L.

In a preferred embodiment of the method according to the invention, the acid leaching solution 19 is reintegrated using the diluted sulfuric acid solution 12 obtained from the recondensation of the vapours produced during the thermal pre-treatment step 10 at 700°C.

The acid leaching 20 can be carried out in a single step, even with reactors in parallel, or in distinct steps in series, with co-current flows or with counter-current flows. The ratio between the solid fraction 11 to be leached and the acid leaching solution 19 is between 1/3 s/l and 1/30 s/l. In a preferred embodiment of the method according to the invention, the solid/liquid ratio of the acid leaching 20 is equal to 1/10 s/l.

The pH of the acid leaching solution 19 is in the range between pH 1.5 - pH 3.5. Alternatively, the molarity of sulfuric acid, which is necessary to bring the elements present in the form of sulphates into solution, is in the range between 0.005 mol/L - 0.1 mol/L.

The acid leaching 20 can be carried out in a temperature range between 15°C and 60°C, at atmospheric pressure. In a preferred embodiment of the method according to the invention, the acid leaching 20 is carried out in three steps, with flows in counter-current, at atmospheric pressure and temperature of 25°C.

The overall contact time for carrying out the acid leaching 20 is between 10 minutes and 120 minutes. In a preferred embodiment of the method according to the invention, the overall contact time, during the acid leaching 20, is 60 minutes.

Two main flows are obtained from the acid leaching step 20;
- an acid flow 21 containing a solution of zinc, copper, silver sulphates, as well as calcium, magnesium, manganese and traces of other minor elements;
- a solid fraction 22, enriched in iron oxides, lead sulphate, silver sulphate in significant concentration and traces of minor elements.

The acid flow 21 obtained from the acid leaching step 20 contains a solution of zinc, copper, silver, as well as calcium, magnesium, manganese, and traces of other minor elements. This acid flow 21 can be directly returned to the plant 23 which has generated the jarosite, as it is suitable to be reprocessed for the purification and separation of zinc, lead and silver, in the factory cycles.

In an alternative embodiment not part of the method according to the invention, this solution is processed to separate the silver from the zinc and copper, so as to produce silver salts and, separately, solid zinc and copper salts, to be sent for refining in the plant or to be sold on the reference market. The silver present in the acid flow is selectively precipitated by adding chlorides, in the form of NaCl, according to the reaction:

AgSO₄ + 2NaCl → 2AgCl(s) + Na₂SO₄

The precipitation can be carried out in a temperature range between 15°C and 60°C, at atmospheric pressure.

The overall reaction time for carrying out the precipitation is between 5 minutes and 60 minutes. In a preferred embodiment of the method according to the invention, the overall reaction time is 10 minutes.

The zinc and copper still present in the acid flow are precipitated together, in the form of insoluble hydroxides, modifying the pH of the acid flow until it reaches a range between pH 7.0 and pH 9.0.

The precipitation can be carried out in a temperature range between 15 °C and 60°C, at atmospheric pressure. In a preferred embodiment, the basifying agent is a 30% w/w NaOH solution.

The mixture of zinc and copper hydroxides, also containing traces of minority elements, after possible calcination to produce the corresponding oxides, is sent to the plant, to be included in the refining cycles, or is sold on the reference market.

The solid fraction 22 obtained from the acid leaching step 20, after possible washing with water to optimize the recovery of the mother liquors, is sent to the subsequent saline leaching 30. In this step, the solid fraction 22 coming from the acid leaching step 20 is treated with a NaCl solution 29, with a concentration in the range between 20 g/L and 350 g/L. In a preferred embodiment of the method according to the invention, the NaCl solution 29 used for the saline leaching 30 has a concentration of 300 g/L. During the saline leaching 30, the extraction of the lead and silver still present in the solid is obtained, in the form of soluble chlorides in a saline solution 31, separating them from the iron oxides and from the minor elements, which are insoluble under the reaction conditions, which are concentrated in a solid fraction 32. This is possible thanks to the formation of a particularly soluble complex that lead forms with chloride ions, under specific conditions of high concentration. Initially there is the formation of PbCl₂, whose solubility is modest at low concentrations of chloride. However, the solubility of this compound increases with the increasing activity of the chlorides present in the reaction environment, favouring the formation of soluble lead chloride complexes according to the following equations:

Pb²⁺ + Cl- → PbCl⁺ (c)

PbCl⁺ + Cl- → PbCl₂ (d)

PbCl² + Cl- → PbCl₃⁻ (e)

PbCl₃⁻ + Cl- → PbCl₄²⁻ (f)

By means of similar reactions, the silver present in the leached solid is also brought into solution, together with the lead.

The saline leaching 30 can be carried out in a single step, even with reactors in parallel, or in distinct steps in series, with co-current flows or with counter-current flows. The ratio between the solid fraction 22 to be leached and the saline leaching liquid 29 is in the range between 1/5 s/l and 1/30 s/l. In a preferred embodiment of the method according to the invention, the solid/liquid ratio of the saline leaching 30 is equal to 1/10.

The saline leaching 30 can be carried out in a range of temperature between 15°C and 60 °C, at atmospheric pressure. In a preferred embodiment of the method according to the invention, the saline leaching 30 is carried out in three steps, with counter-current flows, at atmospheric pressure and a temperature of 25°C.

The overall contact time for carrying out the saline leaching 30 is between 10 minutes and 120 minutes. In a preferred embodiment of the method according to the invention, the overall contact time, during the saline leaching 30, is 60 minutes.

Two main flows come out of the saline leaching step 30: a saline solution 31 containing lead and silver and a solid fraction 32 enriched in iron(III) oxide and containing silica.

The solid fraction 32 enriched in iron(III) oxide is subjected to a purification step 50 by the silica, to obtain a solid flow 51 enriched in iron oxide according to an acid purification step, with the production of iron oxide pigment (IOP).

According to an alternative method, which is not part of the present invention, the solid fraction 32 enriched in iron(III) oxide can also be subjected to a basic purification step, in which the solid is subjected to hot washing with a NaOH solution with a concentration in the range between 2 mol/L and 10 mol/L. In a preferred alternative, the concentration of the NaOH solution is 5 mol/L. The solid/liquid ratio in the basic purification step with hot washing with NaOH is between 1/5 s/l and 1/30 s/l. In a preferred alternative, the solid/liquid ratio is equal to 1/10 s/l.

The temperature used in the basic purification step with hot washing with NaOH is between 80°C and 180 °C. In a preferred alternative of the method, the temperature used in the basic purification step with washing with NaOH is 150°C.

At the end of the basic purification step with washing with NaOH, an iron(III) oxide in the form of hematite is obtained, with a degree of purity >96%, which can be exploited on the reference market. From the regeneration treatment of the NaOH solution that has solubilized the silica, crude sodium silicate is obtained, to be managed as a residue to be disposed of or as a secondary raw material to be reused.

In the acid purification step, the iron(Ill) oxide of the solid fraction 32 coming from the saline leaching step 30 is selectively solubilized, through the use of an acid solution. The acids used are selected, for example, from hydrochloric acid, sulfuric acid, nitric acid or a mixture thereof. Under the acid reaction conditions, the silica remains insolubilized; the solubilized iron(III), after separation from the insolubilized residue, is precipitated under controlled conditions, in order to produce an iron oxide pigment - IOP, with a degree of purity >96%, which can be exploited on the reference market.

The saline solution 31 produced at the end of the saline leaching step 30, containing lead and silver, is treated in a special step 40. By adding sodium sulphide 39, the formation of insoluble PbS and AgS is obtained, which are separated from the saline solution 31, according to the following reactions:

PbCl₂ + Na₂S → PbS (s) + 2NaCl

AgCl + Na₂S → AgS (s) + NaCl

to obtain a solid fraction 41 of PbS and AgS, which can be sent for refining in the plant.

As evident from the preceding equations, the reactions allow the regeneration of the concentration of the saline solution in a saline recirculation stream 42, which is then reused in the saline leaching cycle 30.

At the end of the procedure according to the invention, a reduction of more than 90% is obtained with respect to the jarosite entering the treatment.

The following example 1 describes an embodiment of the method according to the invention.

### Example 1

The example illustrates in practice an application of the method which is the object of the invention.

The following Table 1 shows the elemental analysis of the jarosite used for treatment, previously dried at 105°C.

**Table 1 (composition of the jarosite, values referred to the dry solid)**

| Parameter | u. m. (mg/kg) |
|---|---|
| Ag | 197 |
| Al | 633 |
| Ca | 10700 |
| Cr | 260 |
| Cu | 3700 |
| Fe | 260000 |
| Mg | 1200 |
| Mn | 4100 |
| Pb | 60000 |
| S | 95000 |
| Zn | 75000 |

The jarosite was subjected to thermal pre-treatment in an electric oven, at a temperature of 700°C.

The gases developed during the treatment were conveyed and condensed, creating a solution of diluted sulfuric acid. The solid produced by the thermal pre-treatment was subjected to subsequent hydrometallurgical treatments.

**Table 2 (composition of the jarosite after pre-treatment at 700°C)**

| Parameter | u. m. (mg/kg) |
|---|---|
| Ag | 230 |
| Al | 741 |
| Ca | 12519 |
| Cr | 304 |
| Cu | 4329 |
| Fe | 304200 |
| Mg | 1404 |
| Mn | 4797 |
| Pb | 70200 |
| S | 111150 |
| Zn | 87750 |

In particular, the thermally pre-treated material was subjected to leaching with a 0.01 mol/L sulfuric acid solution, using a solid/liquid ratio (s/l) equal to 1/10 and a contact time of 60 minutes, at a temperature of 25°C and at atmospheric pressure, in a stirred reactor. At the end of the contact time, the residual solid was separated from the acid leaching solution.

The following Table 3 shows the concentration of the elements extracted at the end of the leaching with 0.01 mol/L sulfuric acid, carried out, with a solid/liquid ratio of 1/10, on the thermally pre-treated jarosite at 700°C, described in the previous Table 2.

**Table 3 - composition of the liquid after the acid leaching**

| Parameter | u. m. (mg/kg) |
|---|---|
| Ag | 18.6 |
| Al | 20 |
| Ca | 726 |
| Cr | - |
| Cu | 390 |
| Fe | 10 |
| Mg | 222 |
| Mn | 540 |
| Pb | 3.6 |
| S | - |
| Zn | 8161 |

By evaluating the data reported in Table 3 in relation to the theoretically extractable amounts of the various monitored elements, it appears that, following the leaching with 0.01 mol/L sulfuric acid, a selective extraction of silver, copper and zinc was obtained, with extraction yields of 80%, 90% and 93%, respectively. Furthermore, in this step, the extraction of the majority of some minority elements such as manganese, calcium and magnesium was also obtained, which are in any case in minimal concentrations compared to the majority of the extracted elements.

Before the acid leaching solution was used for recovery in the plant, it was treated to selectively extract the silver present.

The silver present in the acid leaching solution was precipitated by addition of chlorides, in a stoichiometrically controlled amount. In fact, while soluble complexes can be created by a strong excess of chlorides with silver, an adjusted addition forms an insoluble silver chloride. The chlorides are provided in the form of NaCl starting from a 10 g/L aqueous solution.

The precipitation reaction was carried out in a stirred reactor at atmospheric pressure at a temperature of 25°C, with a reaction time of 10 minutes. Subsequently, the insoluble silver chloride was separated from the acid solution by filtration with a suitable equipment and, subsequently, sent for a final purification according to one of the known techniques (for example electrodeposition).

The solution coming from the acid leaching has therefore kept the composition of the other monitored elements unchanged and is sent to the recovery of the zinc in the plant.

The residual solid, coming out of the acid leaching, was subjected to a further leaching step, using a saline solution. In this step the solid was subjected to leaching with a NaCl 300 g/L (5M) aqueous solution in a S/L ratio (solid/liquid) of 1/10 for 1 hour at a temperature of 25°C in a stirred reactor at atmospheric pressure. In this step, the almost quantitative extraction of the lead and silver present in the solid is obtained. The following Table 4 reports the composition of the saline leaching solution at the end of the contact time of 60 minutes.

**Table 4 - liquid after saline leaching**

| Parameter | u. m. (mg/kg) |
|---|---|
| Ag | 4.1 |
| Al | 1 |
| Ca | 613 |
| Cr | - |
| Cu | 7 |
| Fe | - |
| Mg | 3 |
| Mn | 11 |
| Pb | 5300 |
| S | - |
| Zn | 135 |

The saline solution containing silver and lead was then added with sodium sulphide, at a temperature of 25°C in a stirred reactor at atmospheric pressure. In this way, recovery by precipitation of lead and silver in the form of sulphides is obtained; the extraction yield of these elements is greater than 99%. The precipitation reactions of lead and silver also allow the regeneration of the concentration of the residual sodium chloride solution, which is then recirculated in the saline leaching step.

Before being sent to the separation processes in the plant, the solid containing lead and silver sulphides produced by the regeneration of the saline leaching solution was carefully washed with water to remove any residuals of the saline solution.

At the end of all the hydrometallurgical treatment steps (acid and saline leaching), the final residual solid is composed of about 85% of iron(III) oxide and by about 15% of silica.

This solid enriched in iron(III) oxide was then subjected to an acid purification process by silica. In this step the solid residue from the saline leaching was washed for 30 minutes with a 3.5M sulfuric acid solution and a s/I ratio (solid/liquid) equal to 1/10 in an autoclave at a temperature of 90°C and at a pressure of 1.5 bar.

At the end of the washing method with NaOH, an iron(III) oxide in the form of a pigment (iron oxide pigment - IOP) was obtained, with a degree of purity higher than 96%. This product is intended for sale in the specific reference market.

The present invention has been described for illustrative but not limitative purposes, according to its preferred embodiments, but it is to be understood that variations and/or modifications may be made by those skilled in the art without thereby departing from the scope of protection as defined by the attached claims.

## Claims

1. Method for the treatment of jarosite and other residues (1) of the zinc and lead production industry, including the following steps:
- thermal treatment (10) of the residues (1), at an increasing temperature from a minimum of 250°C up to a maximum between 500°C and 700 °C, to obtain the evaporation of the imbibition water and the demolition of the jarosite molecule, resulting in the development of SO₃ and in the removal of OH⁻ groups to give additional water in the gaseous phase, and resulting in the obtainment, from the recondensation of these components, of an aqueous solution (12) of diluted sulfuric acid, and with the simultaneous formation of a solid fraction (11) composed of iron(III) oxide, zinc, lead, silver, copper sulphates and other minor elements;
- acid leaching (20) of said solid fraction (11) obtained from said thermal treatment step (10), by adding an acid leaching solution (19), to obtain an acid flow (21) containing a solution of zinc, copper and silver sulphates, and a solid fraction (22) enriched in iron oxides, lead sulphate and silver sulphate;
- saline leaching (30) of said solid fraction (22) obtained from said acid leaching step (20), to obtain a saline solution (31) containing lead and silver and a solid fraction (32) enriched in iron(III) oxide and containing silica;
- refining treatment (40) of the saline solution (31) containing lead and silver obtained from said saline leaching step (30); and
- purification (50) of the silica of the solid fraction (32) enriched in iron(III) oxide and containing silica obtained from said saline leaching step (30), by using an acid solution, to obtain
- solubilization of iron(III);
- separation of the solubilized iron(III) from the silica, which remains insolubilized;
- precipitation of iron(III) to obtain iron oxide pigment.

2. Method according to claim 1, wherein said acid leaching step (20) can be carried out at a temperature between 15°C and 60°C, preferably 25 °C, at atmospheric pressure, in a pH range between pH 1.5 and pH 3.5 and for a time ranging from 10 minutes to 120 minutes, preferably equal to 60 minutes; the ratio between the amount of solid fraction (11) and acid leaching solution (19) ranging from 1/3 s/l to 1/30 s/l, preferably equal to 1/10 s/l.

3. Method according to claim 1 or 2, wherein said acid leaching solution (19) is an aqueous solution of sulfuric acid, with a concentration between 0.005 mol/L and 0.1 mol/L, preferably equal to 0.01 mol/L.

4. Method according to any one of the preceding claims, wherein said acid leaching solution (19) is reintegrated using the diluted sulfuric acid solution (12) obtained from the recondensation of the vapours produced during the thermal pre-treatment step at 700°C.

5. Method according to any one of claims 1-4, wherein said acid flow (21) obtained from said acid leaching step (20) is returned to the zinc and lead production plant from which the residues (1) come.

6. Method according to any one of claims 1-4, wherein said acid flow (21) obtained from said acid leaching step (20) is treated with chlorides, at a temperature between 15°C and 60°C, at atmospheric pressure, for a time ranging from 5 to 60 minutes, preferably 10 minutes, to obtain the precipitation of the silver present in the acid flow (21).

7. Method according to any one of the preceding claims, wherein, before being subjected to the saline leaching step (30), the solid fraction (22) obtained from said acid leaching step (20) is subjected to washing with water.

8. Method according to any one of the preceding claims, wherein said saline leaching step (30) takes place by treatment at a temperature ranging from 15 °C and 60°C, preferably equal to 25°C, at atmospheric pressure, for a time ranging between 10 and 120 minutes, preferably equal to 60 minutes with a NaCl solution (29), with a concentration between 20 g/L and 350 g/L, preferably equal to 300 g/L, the ratio between the amount of solid fraction (22) to be leached and the NaCl solution being between 1/5 s/l and 1/30 s/l, preferably equal to 1/10.

9. Method according to claim 1, wherein said acid purification solution comprises an acid selected from: hydrochloric acid, sulfuric acid, nitric acid or mixtures thereof.

10. Method according to any one of the preceding claims, wherein said refinement treatment step (40) of the saline solution (31) containing lead and silver obtained from said saline leaching step (30) is obtained by adding sodium sulphide (39), to obtain the formation of insoluble PbS and AgS, which are separated from the saline solution, with regeneration of the concentration of the saline solution, which is reused in the saline leaching cycle.

## Patentansprüche

1. Verfahren zur Behandlung von Jarosit und anderen Rückständen (1) der Zink- und Bleiproduktionsindustrie, das die folgenden Schritte umfasst:
- thermische Behandlung (10) der Rückstände (1) bei ansteigender Temperatur von einem Minimum von 250 °C bis zu einem Maximum zwischen 500 °C und 700 °C, um die Verdampfung des Imbibitionswassers und die Zerstörung des Jarositmoleküls zu erreichen, was zur Entwicklung von SO₃ und zur Entfernung von OH⁻ -Gruppen führt, um zusätzliches Wasser in der Gasphase zu erhalten, und aus der Rekondensation dieser Komponenten eine wässrige Lösung (12) von verdünnter Schwefelsäure und gleichzeitig eine feste Fraktion (11) aus Eisen(III)-oxid, Zink, Blei, Silber, Kupfersulfaten und anderen kleineren Elementen erhalten wird;
- saures Auslaugen (20) der aus dem thermischen Behandlungsschritt (10) erhaltenen festen Fraktion (11) durch Zugabe einer sauren Auslaugungslösung (19), um einen sauren Strom (21) zu erhalten, der eine Lösung von Zink-, Kupfer- und Silbersulfaten enthält, und eine feste Fraktion (22), die mit Eisenoxiden, Blei- und Silbersulfat angereichert ist;
- Salzlaugung (30) der festen Fraktion (22), die aus dem Säurelaugungsschritt (20) erhalten wurde, um eine Salzlösung (31), die Blei und Silber enthält, und eine feste Fraktion (32), die mit Eisen(III)-oxid angereichert ist und Siliciumdioxid enthält, zu erhalten;
- Raffinationsbehandlung (40) der blei- und silberhaltigen Salzlösung (31), die aus dem Salzlaugungsschritt (30) erhalten wurde; und
- Reinigung (50) des Siliciumdioxids der festen Fraktion (32), die mit Eisen(III)-oxid angereichert ist und Siliciumdioxid enthält, das aus dem Salzlaugungsschritt (30) erhalten wurde, unter Verwendung einer Säurelösung, um Folgendes zu erhalten
- Solubilisierung von Eisen(III);
- Abtrennung des gelösten Eisen (III) von der Kieselsäure, die unlöslich bleibt;
- Ausfällung von Eisen(III) zur Gewinnung von Eisenoxidpigment.

2. Verfahren nach Anspruch 1, wobei der Säureauslaugungsschritt (20) bei einer Temperatur zwischen 15 °C und 60 °C, vorzugsweise 25 °C, bei Atmosphärendruck, in einem pH-Bereich zwischen pH 1,5 und pH 3,5 und für eine Zeit im Bereich von 10 Minuten bis 120 Minuten, vorzugsweise gleich 60 Minuten, durchgeführt werden kann; wobei das Verhältnis zwischen der Menge der festen Fraktion (11) und der Säureauslaugungslösung (19) im Bereich von 1/3 s/l bis 1/30 s/l, vorzugsweise gleich 1/10 s/l, liegt.

3. Verfahren nach Anspruch 1 oder 2, wobei die saure Auslauglösung (19) eine wässrige Lösung von Schwefelsäure mit einer Konzentration zwischen 0,005 mol/L und 0,1 mol/L, vorzugsweise gleich 0,01 mol/L ist.

4. Verfahren nach einem der vorhergehenden Ansprüche, wobei die saure Auslauglösung (19) unter Verwendung der verdünnten Schwefelsäurelösung (12), die aus der Rekondensation der während des thermischen Vorbehandlungsschritts bei 700 °C erzeugten Dämpfe erhalten wurde, reintegriert wird.

5. Verfahren nach einem der Ansprüche 1 bis 4, wobei der aus dem Säurelaugungsschritt (20) erhaltene Säurestrom (21) in die Zink- und Bleiproduktionsanlage zurückgeführt wird, aus der die Rückstände (1) stammen.

6. Verfahren nach einem der Ansprüche 1 bis 4, wobei der aus dem Säureauslaugungsschritt (20) erhaltene Säurestrom (21) mit Chloriden bei einer Temperatur zwischen 15 °C und 60 °C bei Atmosphärendruck für eine Zeit im Bereich von 5 bis 60 Minuten, vorzugsweise 10 Minuten, behandelt wird, um die Ausfällung des in dem Säurestrom (21) vorhandenen Silbers zu erhalten.

7. Verfahren nach einem der vorhergehenden Ansprüche, bei dem die aus dem Säureauslaugungsschritt (20) erhaltene feste Fraktion (22), bevor sie dem Salzauslaugungsschritt (30) unterzogen wird, einem Waschen mit Wasser unterzogen wird.

8. Verfahren nach einem der vorhergehenden Ansprüche, **dadurch gekennzeichnet, dass** der Schritt der Salzlaugung (30) durch Behandlung bei einer Temperatur zwischen 15 °C und 60 °C, vorzugsweise gleich 25 °C, bei Atmosphärendruck, während einer Zeit zwischen 10 und 120 Minuten, vorzugsweise gleich 60 Minuten, mit einer NaCl-Lösung (29) mit einer Konzentration zwischen 20 g/L und 350 g/L, vorzugsweise gleich 300 g/L, erfolgt, wobei das Verhältnis zwischen der Menge der auszulaugenden festen Fraktion (22) und der NaCl-Lösung zwischen 1/5 s/l und 1/30 s/l, vorzugsweise gleich 1/10, beträgt.

9. Verfahren nach Anspruch 1, wobei die saure Reinigungslösung eine Säure umfasst, die ausgewählt ist aus: Salzsäure, Schwefelsäure, Salpetersäure oder Mischungen davon.

10. Verfahren nach einem der vorhergehenden Ansprüche, wobei der Schritt der Veredelungsbehandlung (40) der aus dem Salzlaugungsschritt (30) erhaltenen blei- und silberhaltigen Salzlösung (31) durch Zugabe von Natriumsulfid (39) erfolgt, um die Bildung von unlöslichem PbS und AgS zu erreichen, die von der Salzlösung abgetrennt werden, wobei die Konzentration der Salzlösung, die im Salzlaugungszyklus wiederverwendet wird, regeneriert wird.

## Revendications

1. Méthode de traitement de la jarosite et d'autres résidus (1) de l'industrie de production de zinc et de plomb, comprenant les étapes suivantes:
- traitement thermique (10) des résidus (1), à une température croissante d'un minimum de 250 °C jusqu'à un maximum compris entre 500 °C et 700 °C, pour obtenir l'évaporation de l'eau d'imbibition et la démolition de la molécule de jarosite, entraînant le développement de SO₃ et l'élimination des groupes OH⁻ pour donner de l'eau supplémentaire dans la phase gazeuse, et l'obtention, par recondensation de ces composants, d'une solution aqueuse (12) d'acide sulfurique dilué, avec formation simultanée d'une fraction solide (11) composée d'oxyde de fer(III), de zinc, de plomb, d'argent, de sulfates de cuivre et d'autres éléments mineurs;
- lixiviation acide (20) de ladite fraction solide (11) obtenue à l'issue de l'étape de traitement thermique (10), par ajout d'une solution de lixiviation acide (19), pour obtenir un flux acide (21) contenant une solution de sulfates de zinc, de cuivre et d'argent, et une fraction solide (22) enrichie en oxydes de fer, en sulfate de plomb et en sulfate d'argent;
- lixiviation saline (30) de ladite fraction solide (22) obtenue à l'issue de l'étape de lixiviation acide (20), pour obtenir une solution saline (31) contenant du plomb et de l'argent et une fraction solide (32) enrichie en oxyde de fer(III) et contenant de la silice;
- traitement d'affinage (40) de la solution saline (31) contenant du plomb et de l'argent obtenue lors de ladite étape de lixiviation saline (30); et
- purification (50) de la silice de la fraction solide (32) enrichie en oxyde de fer(III) et contenant de la silice obtenue lors de ladite étape de lixiviation saline (30), à l'aide d'une solution acide, pour obtenir
- solubilisation du fer(III);
- séparation du fer(III) solubilisé de la silice, qui reste insolubilisée;
- précipitation du fer(III) pour obtenir un pigment d'oxyde de fer.

2. Méthode selon la revendication 1, dans laquelle ladite étape de lixiviation acide (20) peut être effectuée à une température comprise entre 15 °C et 60 °C, de préférence 25 °C, à pression atmosphérique, dans une plage de pH comprise entre pH 1,5 et pH 3,5 et pendant une durée allant de 10 minutes à 120 minutes, de préférence égale à 60 minutes; le rapport entre la quantité de fraction solide (11) et la solution de lixiviation acide (19) allant de 1/3 s/l à 1/30 s/l, de préférence égal à 1/10 s/l.

3. Méthode selon la revendication 1 ou 2, dans laquelle ladite solution de lixiviation acide (19) est une solution aqueuse d'acide sulfurique, dont la concentration est comprise entre 0,005 mol/L et 0,1 mol/L, de préférence égale à 0,01 mol/L.

4. Méthode selon l'une quelconque des revendications précédentes, dans laquelle ladite solution de lixiviation acide (19) est réintégrée à l'aide de la solution d'acide sulfurique diluée (12) obtenue par recondensation des vapeurs produites lors de l'étape de prétraitement thermique à 700 °C.

5. Méthode selon l'une des revendications 1 à 4, dans laquelle le flux acide (21) obtenu à l'issue de l'étape de lixiviation acide (20) est renvoyé à l'usine de production de zinc et de plomb d'où proviennent les résidus (1).

6. Méthode selon l'une quelconque des revendications 1 à 4, dans laquelle le flux acide (21) obtenu à l'issue de l'étape de lixiviation acide (20) est traité avec des chlorures, à une température comprise entre 15 °C et 60 °C, à pression atmosphérique, pendant une durée allant de 5 à 60 minutes, de préférence 10 minutes, pour obtenir la précipitation de l'argent présent dans le flux acide (21).

7. Méthode selon l'une quelconque des revendications précédentes, dans laquelle, avant d'être soumise à l'étape de lixiviation saline (30), la fraction solide (22) obtenue à l'issue de ladite étape de lixiviation acide (20) est soumise à un lavage à l'eau.

8. Méthode selon l'une quelconque des revendications précédentes, dans laquelle ladite étape de lixiviation saline (30) a lieu par traitement à une température comprise entre 15 °C et 60 °C, de préférence égale à 25 °C, à pression atmosphérique, pendant une durée comprise entre 10 et 120 minutes, de préférence égale à 60 minutes avec une solution de NaCl (29), de concentration comprise entre 20 g/L et 350 g/L, de préférence égale à 300 g/L, le rapport entre la quantité de fraction solide (22) à lixivier et la solution de NaCl étant compris entre 1/5 s/l et 1/30 s/l, de préférence égal à 1/10.

9. Méthode selon la revendication 1, dans laquelle ladite solution de purification d'acide comprend un acide choisi parmi: l'acide chlorhydrique, l'acide sulfurique, l'acide nitrique ou leurs mélanges.

10. Méthode selon l'une quelconque des revendications précédentes, dans laquelle ladite étape de traitement d'affinage (40) de la solution saline (31) contenant du plomb et de l'argent obtenue à partir de ladite étape de lixiviation saline (30) est obtenue par l'ajout de sulfure de sodium (39), pour obtenir la formation de PbS et AgS insolubles, qui sont séparés de la solution saline, avec régénération de la concentration de la solution saline, qui est réutilisée dans le cycle de lixiviation saline.
